(19) Europäisches Patentamt
European Patent Office
Office européen des brevets

(11) Veröffentlichungsnummer: **0 312 930 B1**

(12) **EUROPÄISCHE PATENTSCHRIFT**

(45) Veröffentlichungstag der Patentschrift: **04.03.92**

(51) Int. Cl.5: **C08L 77/00**, //(C08L77/00, 77:00,21:00)

(21) Anmeldenummer: **88117105.2**

(22) Anmeldetag: **14.10.88**

(54) **Thermoplastische Formmassen auf der Basis von Polyamidmischungen.**

(30) Priorität: **20.10.87 DE 3735404**

(43) Veröffentlichungstag der Anmeldung:
**26.04.89 Patentblatt 89/17**

(45) Bekanntmachung des Hinweises auf die Patenterteilung:
**04.03.92 Patentblatt 92/10**

(84) Benannte Vertragsstaaten:
**BE CH DE FR GB LI NL**

(56) Entgegenhaltungen:
**EP-A- 0 034 704**
**EP-A- 0 244 601**
**CH-A- 655 941**
**US-A- 4 556 696**

**PATENT ABSTRACTS OF JAPAN, Band 9, Nr. 108 (C-280)[1831], 11. Mai 1985; & JP-A-60 1255 (MITSUI SEKIYU KAGAKU KOGYO K.K.) 07-01-1985**

(73) Patentinhaber: **BASF Aktiengesellschaft**
**Carl-Bosch-Strasse 38**
**W-6700 Ludwigshafen(DE)**

(72) Erfinder: **Plachetta, Christoph, Dr.**
**Albert-Einstein-Allee 12**
**W-6703 Limburgerhof(DE)**
Erfinder: **Goetz, Walter, Dr.**
**Jung-Stilling-Strasse 11**
**W-6750 Kaiserslautern(DE)**
Erfinder: **Blinne, Gerd, Dr.**
**Im Woogtal 7**
**W-6719 Bobenheim(DE)**

EP 0 312 930 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft thermoplastische Formmassen, enthaltend als wesentliche Komponenten

A) 10-89 Gew.% eines Copolyamids aus

$A_1$) 80-99 Gew.% wiederkehrenden Einheiten, die sich von Adipinsäure und Hexamethylendiamin ableiten, und

$A_2$) 1-20 Gew.% Einheiten, die sich von ε-Caprolactam ableiten

B) 10-89 Gew.% Polyhexamethylenadipinsäureamid

C) 1-40 Gew.% eines schlagzäh modifizierenden Kautschuks

sowie darüber hinaus

D) 0-60 Gew.% faser- oder teilchenförmigen Füllstoffen oder deren Mischungen.

Außerdem betrifft die Erfindung die Verwendung derartiger Formmassen zur Herstellung von Fasern, Folien und Formkörper sowie aus den erfindungsgemäßen Formmassen als wesentlichen Komponenten erhältliche Formkörper.

Polyamide finden in vielen Bereichen weite Anwendung, z.B. im Automobilbereich, zur Herstellung von Gehäusen für elektrische Geräte oder auf dem Bausektor.

Eine wichtige Eigenschaft, die bei vielen Anwendungen eine wesentliche Rolle spielt, ist die Schlagzähigkeit der Polyamide, insbesondere die mehraxiale Schlagzähigkeit (diese stellt ein geeigneteres Kriterium dar, als die uniaxiale Schlagzähigkeit nach Izod oder nach Charpy). Gefordert wird von den Polyamiden ein duktiles Bruchverhalten bei Belastung, d.h. beim Bruch sollen die gebildeten Risse und Schwachstellen möglichst eng um den Belastungsbereich konzentriert bleiben und sich nicht weiter ausdehnen.

In der US-A 4 174 358 wird beschrieben, daß man die Schlagzähigkeit von Polyamiden durch Zusatz von statistischen Copolymeren verbessern kann, die eine Wechselwirkung mit dem Polyamid eingehen. Die Zähigkeitseigenschaften dieser Produkte bei tiefen Temperaturen sind jedoch nicht in vollem Umfang zufriedenstellend.

Aus der EP-A 34 704 ist bekannt, daß Mischungen aus Poly-ε-caprolactam und Polyhexamethylenadipinsäureamid in Verbindung mit bestimmten Kautschuken gegenüber entsprechenden Abmischungen, die nur eines der Polyamide enthalten, verbesserte Schlagzähigkeiten aufweisen.

Bedingt durch den relativ hohen Gehalt an Poly-ε-caprolactam ist die Wärmeformbeständigkeit der Mischungen gegenüber reinem Polyhexamethylenadipinsäureamid in beträchtlichem Maß erniedrigt, was sich nachteilig auswirkt.

Aufgabe der vorliegenden Erfindung war es daher, thermoplastische Formmassen auf der Basis von Polyhexamethylenadipinsäureamid als Hauptkomponente zur Verfügung zu stellen, die gute Zähigkeitseigenschaften, insbesondere eine gute mehraxiale Schlagzähigkeit bei tiefen Temperaturen und eine gute Wärmeformbeständigkeit aufweisen.

Diese Aufgabe wird erfindungsgemäß mit den eingangs definierten thermoplastischen Formmassen gelöst.

Als Komponente A) enthalten die erfindungsgemäßen Formmassen 10-89, vorzugsweise 10-10 und insbesondere 15-70 Gew.% (bezogen auf das Gesamtgewicht der Formmassen) eines Copolyamids auf der Basis von ε-Caprolactam und Adipinsäure und Hexamethylendiamin.

Die wiederkehrenden Einheiten, die sich von ε-Caprolactam ableiten ($A_2$), machen 1-20, vorzugsweise 4-15 und insbesondere 5-12 Gew.% des Gesamtgewichts der Copolyamide aus.

Ein geringer Anteil des ε-Caprolactams, vorzugsweise nicht mehr als 30 Gew.%, kann durch andere polyamidbildende Monomere, vorzugsweise andere Lactame ersetzt werden (selbstverständlich nicht durch Adipinsäure und Hexamethylendiamin). Derartige Monomere sind dem Fachmann an sich bekannt und in der Literatur beschrieben (z.B. in der US-A 4 174 358), so daß sich hier nähere Angaben erübrigen. Vorzugsweise leiten sich die Einheiten $A_2$) ausschließlich von ε-Caprolactam ab.

Als Komponente $A_1$) enthalten die Copolyamide A) 80-99, vorzugsweise 85-96 und insbesondere 88-92 Gew.% an Einheiten, die sich von Adipinsäure und Hexamethylendiamin ableiten. Auch hier können wieder bis zu 30 Gew.% dieser Monomeren durch andere polyamidbildende Monomere ersetzt werden, die für die Herstellung von Polyamiden bekannt sind (mit Ausnahme von ε-Caprolactam).

Besonders bevorzugt leiten sich die Einheiten $A_1$) ausschließlich von Adipinsäure und Hexamethylendiamin ab.

Die Herstellung der Copolyamide A kann nach den für Polyamide üblichen Verfahren erfolgen, wie sie seit langem bekannt und in der Literatur oder den einschlägigen Handbüchern beschrieben sind (z.B. Kunststoff-Handbuch, Bd. VI "Polyamide", Carl Hanser Verlag 1966).

Werden ε-Caprolactam, Adipinsäure und Hexamethylendiamin gleichzeitig umgesetzt, so enthält das

Copolyamid A) die Einheiten $A_1$) und $A_2$) in statistischer Verteilung. Es ist jedoch auch möglich, durch zeitlich gesteuerte getrennte Zugabe der Monomeren Blockcopolyamide mit Blöcken aus Einheiten $A_1$) und $A_2$) herzustellen.

Die relative Viskosität der Copolyamide A) liegt im allgemeinen im Bereich von 2,0-5,0, vorzugsweise von 2,2 bis 4,5, gemessen in 96 %iger Schwefelsäure bei 25 °C (Konz.: 1 g/100 ml)

Als Komponente B) enthalten die erfindungsgemäßen Formmassen 10-89, vorzugsweise 10-70 und insbesondere 15-70 Gew.%, bezogen auf das Gesamtgewicht der Formmassen, Polyhexamethylenadipinsäureamid. Entsprechende Produkte sind kommerziell im Handel erhältlich (z.B. Ultramid®A der BASF Aktiengesellschaft).

Die relative Viskosität des Polyhexamethylenadipinsäureamids liegt im allgemeinen - wie die der Copolyamide A) - im Bereich von 2,0-5,0, vorzugsweise von 2,2 bis 4,5, gemessen in 96 %iger Schwefelsäure bei 25 °C (Konz.: 1 g/100 ml).

Als Komponente C) enthalten die erfindungsgemäßen Formmassen 1 bis 40, insbesondere 5 bis 35 und besonders bevorzugt 8 bis 30 Gew.% eines Kautschuks.

Prinzipiell sind alle Kautschuke geeignet, die in Abmischung mit Polyamiden eine Verbesserung der Schlagzähigkeit gegenüber reinem Polyamid mit sich bringen.

Im allgemeinen handelt es sich dabei um Copolymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril und Acryl- und Methacrylsäureester mit 1 bis 18 C-Atomen in der Alkoholkomponente.

Kautschuke, die reaktive Komponenten enthalten, die eine Haftung mit den Amin- oder Carboxylendgruppen des Polyamids ermöglichen, werden dabei bevorzugt. Als reaktive Komponenten seien olefinisch ungesättigte Carbonsäuren und deren Anhydride genannt.

Kautschuke C) werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 90:10 aufweisen.

Die Mooney-Viskositäten (MLI + 4/100 °C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethylidennorbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien nur Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxygruppen werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$R_1C(COOR_2)C=C(COOR_3)R_4$ (I)

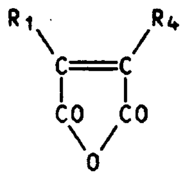

(II)

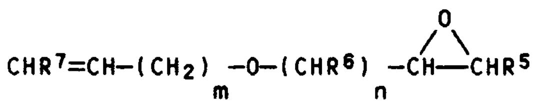

(III)

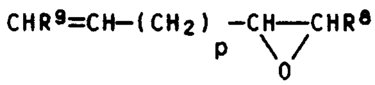

(IV)

wobei $R^1$ - $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind $R^1$ - $R^7$ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid und Epoxygruppen-enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

50 bis 98, insbesondere 60 bis 95 Gew.% Ethylen,

0,5 bis 40, insbesondere 3 bis 20 Gew.% Glycidylacrylat und/oder Glycidylmethacrylat, Acrylsäure und/oder Maleinsäureanhydrid

1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i-bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C und 2,16 kg Belastung).

Bevorzugte Elastomere (Kautschuke) C) sind weiterhin Pfropfcopolymerisate mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk C) können auch Pfropfpolymerisate aus

25 bis 98 Gew.% eines Acrylatkautschuks mit einer Glasübergangstemperatur von unter -20 °C als Pfropfgrundlage (Basispolymer)

und

2 bis 75 Gew.% eines copolymerisierbaren ethylenisch ungesättigten Monomeren, dessen Homo- bzw. Copolymerisate eine Übergangstemperatur von mehr als 25 °C aufweisen, als Pfropfauflage (Pfropfhülle)

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren

halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256, der DE-A-24 44 584 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25 ° C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C) weisen vorzugsweise eine Glasübergangstemperatur von unter -30 ° C, insbesondere von unter -40 ° C auf.

Es versteht sich, daß auch Mischungen der vorstehend aufgeführten Kautschuktypen eingesetzt werden können.

Als faser- oder teilchenförmige Füllstoffe seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt. Der Anteil dieser Füllstoffe betragt 0-60, vorzugsweise 5-50 Gew.%, bezogen auf das Gesamtgewicht der Formmassen.

Neben den wesentlichen Komponenten A) bis C) und ggf. D) können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A) bis D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, nicht verstärkende Füllstoffe, Weichmacher und Flammschutzmittel.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäurealkylester und -amide sowie Ester des Pentaerythrits mit langkettigen Fettsäuren.

Als Flammschutzmittel seien roter Phosphor, Verbindungen des fünfwertigen Phosphors, Melaminderivate und die in der EP-A 55 893 beschriebenen Kombinationen genannt.

Unter den Zusatzstoffen sind auch Stabilisatoren, die die Zersetzung von rotem Phosphor (falls dieser als Flammschutzmittel eingesetzt wird) in Gegenwart von Feuchtigkeit und Luftsauerstoff verhindern. Als Beispiel hierfür seien Zinkoxid und Cadmiumoxid genannt.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 220 bis 300 ° C.

Die erfindungsgemäßen Formmassen zeichnen sich durch eine hervorragende mehraxiale Schlagzähigkeit (insbesondere Durchstoßarbeit) bei tiefen Temperaturen aus. Gegenüber Abmischungen aus Poly-ε-caprolactam und Polyhexamethylenadipinsäureamid (gemäß EP-A 34 704) zeichnen sie sich auch durch eine verbesserte Wärmeformbeständigkeit aus. Dies ist darauf zurückzuführen, daß die Copolyamide mit geringem Anteil an Einheiten, die sich von ε-Caprolactam ableiten, einen höheren Schmelzpunkt als Poly-ε-caprolactam aufweisen.

Beispiele

Es wurden folgende Komponenten eingesetzt:

Komponente A

Statistisches Copolyamid mit 10 Gew.% Einheiten, die sich von ε-Caprolactam ableiten ($A_1$) und 90 Gew.% Einheiten, die sich von Adipinsäure und Hexamethylendiamin ableiten ($A_2$) und einer relativen Viskosität von 2,6 (gemessen in 96 %iger $H_2SO_4$ bei 25 °C; c = 1 g/100 ml) (Ultramid®KR 4640 der BASF Aktiengesellschaft).

Komponente B

Polyhexamethylenadipinsäureamid mit einer relativen Viskosität von 2,6 (gemessen wie bei A/1).

Komponente C

$C_1$:
Ethylen-Propylen-Kautschuk (Gew.-Verhältnis Ethylen/Propylen etwa 75/25) mit 0,7 Gew.% einpolymerisiertem Maleinsäureanhydrid und einem Melt Volume Index (ml/10 min) von 48, gemessen bei 230 °C und 21,6 kg Belastung (Exxelan®1301 der Exxon Chemicals).

$C_2$:
Ethylen/n-Butylacrylat/Acrylsäure-Terpolymer (Gew.-Verh.: 59,5:35:5,5) mit einem MFI (Melt Flow Index) von 10 g/10 min (bei 190 °C und 2,16 kg Belastung).

Komponente D
Wollastonit (Wollastokup®10012 der Fa. NYCO).

Die Komponenten A) bis C) und gegebenenfalls D wurden abgemischt, in einem Extruder bei 290 °C aufgeschmolzen und die homogene Mischung extrudiert und granuliert. Aus dem Granulat wurden im Spritzgußverfahren bei 290 °C Massetemperatur und 80 °C Werkzeugoberflächentemperatur Testkörper zur Bestimmung der mehraxialen Schlagzähigkeit gespritzt. Der Plastechon-Test wurde nach DIN 53 443, Blatt 2 durchgeführt.

Die Zusammensetzung der Massen und die Meßergebnisse sind der nachfolgenden Tabelle zu entnehmen.

Tabelle

| (alle Mengenangaben in Gew.%) | | | | | | |
|---|---|---|---|---|---|---|
| Beispiel | Zusammensetzung (Gew.%) | | | | Plastechon-Test bei -40 °C | |
| | | | | | Schädigungsarbeit (bis zum ersten Anriß) | Durchstoßarbeit |
| | A | B | C | D | Ws (N.m) | Wges (N.m) |
| 1 | 30 | 50 | 20 $C_1$ | - | 34 | 87 |
| 2 | 70 | 10 | 20 $C_1$ | - | 39 | 98 |
| 3V | 80 | - | 20 $C_1$ | - | 33 | 38 |
| 4V | - | 80 | 20 $C_1$ | - | 39 | 54 |
| 5V | 72 | - | 8 $C_2$ | 20 | 6 | - |
| 6 | 64 | 8 | 8 $C_2$ | 20 | 13 | - |

Aus den Beispielen geht hervor, daß die erfindungsgemäßen Formmassen gegenüber Massen, die nur eine der Komponenten A) oder B) enthalten, sich durch eine deutlich verbesserte Durchstoßarbeit auszeichnen.

## Patentansprüche

**1.** Thermoplastische Formmassen, enthaltend als wesentliche Komponenten

A) 10-89 Gew.% eines Copolyamids aus
$A_1$) 80-99 Gew.% wiederkehrenden Einheiten, die sich von Adipinsäure und Hexamethylendiamin ableiten, und
$A_2$) 1-20 Gew.% Einheiten, die sich von $\epsilon$-Caprolactam ableiten
B) 10-89 Gew.% Polyhexamethylenadipinsäureamid
C) 1-40 Gew.% eines schlagzäh modifizierenden Kautschuks
sowie darüber hinaus
D) 0-60 Gew.% faser- oder teilchenförmigen Füllstoffen oder deren Mischungen.

**2.** Thermoplastische Formmassen nach Anspruch 1, dadurch gekennzeichnet, daß das Copolyamid A) aufgebaut ist aus

$A_1$) 85-96 Gew.% wiederkehrenden Einheiten, die sich von Adipinsäure und Hexamethylendiamin ableiten, und
$A_2$) 4-15 Gew.% wiederkehrenden Einheiten, die sich von $\epsilon$-Caprolactam ableiten.

**3.** Verwendung der thermoplastischen Formmassen gemäß den Ansprüchen 1 und 2 zur Herstellung von Fasern, Folien und Formkörpern.

**4.** Formkörper, erhältlich aus thermoplastischen Formmassen gemäß den Ansprüchen 1 und 2 als wesentlichen Komponenten.

## Claims

**1.** A thermoplastic molding composition containing as essential components
A) 10-89 % by weight of a copolyamide of $A_1$) 80-99 % by weight of recurring units derived from adipic acid and hexamethylenediamine and $A_2$) 1-20 % by weight of units derived from $\epsilon$-caprolactam,
B) 10-89% by weight of polyhexamethyleneadipamide,
C) 1-40 % by weight of an impact-modifying rubber
and in addition
D) 0-60 % by weight of a fibrous or particulate filler or a mixture thereof.

**2.** A thermoplastic molding composition as claimed in claim 1, wherein copolyamide A) is built up from

$A_1$) 85-96 % by weight of recurring units deriving from adipic acid and hexamethylenediamine and
$A_2$) 4-15 % by weight of recurring units derived from ε-caprolactam.

**3.** The use of a thermoplastic molding composition as claimed in claims 1 and 2 for producing fibers, films and moldings.

**4.** A shaped article obtainable from a thermoplastic molding composition as claimed in claim 1 or 2 as essential component.

## Revendications

**1.** Masses à mouler thermoplastiques, contenant comme composants essentiels
A) de 10 à 89% en poids d'un copolyamide contenant
$A_1$) de 80 a 99% en poids de motifs répétitifs qui proviennent de l'acide adipique et de l'hexaméthylènediamine, et
$A_2$) de 1 à 20% en poids de motifs qui proviennent de l'ε-caprolactame
B) de 10 à 89% en poids de polyhexaméthylèneadipamide
C) de 1 a 40% en poids d'un caoutchouc de modification de la ténacité aux chocs
et en plus
D) de 0 a 60% en poids de charges sous forme de fibres ou de petites particules ou de leurs mélanges.

**2.** Masses à mouler thermoplastiques selon la revendication 1, caractérisées en ce que le copolyamide A) est constitué
$A_1$) de 85 à 96% en poids de motifs répétitifs qui dérivent de l'acide adipique et de l'hexaméthylènediamine, et
$A_2$) de 4 à 15% en poids de motifs répétitifs qui dérivent de l'ε-caprolactame.

**3.** Utilisation des masses à mouler thermoplastiques selon les revendications 1 et 2 pour la préparation de fibres, de feuilles et de pièces moulées.

**4.** Pièces moulées, préparées à partir des masses à mouler thermoplastiques selon les revendications 1 et 2 en tant que constituants essentiels.